(19) Europäisches Patentamt / European Patent Office / Office européen des brevets

(11) **EP 4 368 673 A1**

(12) **EUROPEAN PATENT APPLICATION**
published in accordance with Art. 153(4) EPC

(43) Date of publication:
**15.05.2024  Bulletin 2024/20**

(21) Application number: **22837684.4**

(22) Date of filing: **05.07.2022**

(51) International Patent Classification (IPC):
*C08L 83/07* (2006.01)     *B32B 27/00* (2006.01)
*C08K 3/013* (2018.01)     *C08L 83/05* (2006.01)
*H10N 30/857* (2023.01)    *H04R 19/02* (2006.01)

(52) Cooperative Patent Classification (CPC):
**B32B 27/00; C08K 3/013; C08L 83/04; H04R 19/02**

(86) International application number:
**PCT/JP2022/026764**

(87) International publication number:
**WO 2023/282270 (12.01.2023 Gazette 2023/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:  **05.07.2021  JP 2021111289**

(71) Applicant: **Dow Toray Co., Ltd.**
**Tokyo 140-8617 (JP)**

(72) Inventor: **FUKUI, Hiroshi**
**Ichihara-shi, Chiba 299-0108 (JP)**

(74) Representative: **Murgitroyd & Company**
**165-169 Scotland Street**
**Glasgow G5 8PL (GB)**

(54) **ORGANOPOLYSILOXANE COMPOSITION FOR TRANSDUCER, LAMINATE COMPRISING CURED FILM THEREOF, USE THEREFOR, AND MANUCATURING METHOD THEREFOR**

(57)     PROBLEM

An object is to provide a laminate body where an organopolysiloxane cured material film which is a dielectric layer is laminated onto an electrode layer or base material layer, in which the adhesion of the interface of the cured material film is improved and the problems of peeling and defects caused by lack of adhesive strength and insufficient tracking do not readily occur, as well as a use thereof and a manufacturing method.

RESOLUTION MEANS

A curable organopolysiloxane composition for a transducer, containing at least:

(A) a polysiloxane having a C=C type curable reactive group;

(B1) a side chain SiH type organohydrogenpolysiloxane;
(B2) a terminated SiH type organohydrogenpolysiloxane;
(C) a hydrosilylation reaction catalyst;
(D) reinforcing filler; and
(E) adhesion imparting agent,
wherein a value of:

$$p_{X1} = \{H_{B1}/H_{B2}\}/\{(H_{B1}+H_{B2})/Vi\}$$

is within a range of 0.1 to 6.0. Selected Drawing: None

EP 4 368 673 A1

**Description**

**TECHNICAL FIELD**

The present invention relates to an organopolysiloxane composition for a transducer, a laminate body containing a cured material film thereof, application thereof, and manufacturing method thereof.

**BACKGROUND ART**

Organopolysiloxane cured materials having a polysiloxane skeletal structure have excellent transparency, electrical insulation, heat resistance, cold resistance, and the like, can have improved electrical activity, if so desired, by introducing a high dielectric functional group such as a fluoroalkyl group or the like, and can be easily processed into a film or sheet. Therefore, the organopolysiloxane cured materials used in various applications such as adhesive films used in various electric and electronic devices and electroactive films used in actuators and other transducer devices are classified into a hydrosilylation reaction curing type, condensation reaction curing type, peroxide curing type, and the like, based on the curing mechanism. In particular, organopolysiloxane cured material films using hydrosilylation reaction curing type curable organopolysiloxane compositions are widely used because they are quick curing when left at room temperature or heated, with no generation of byproducts.

Meanwhile, when an organopolysiloxane cured material film is used as an electronic member such as a touch panel or the like, an electronic component for a display device, and particularly as a transducer material for a sensor, actuator, or the like, an electrode layer must be provided on an electroactive film serving as a dielectric layer. For example, Non-Patent Documents 1 and 2 propose forming an electrode layer with a conductive filler added in a silicone elastomer matrix with excellent flexibility to form an electrode layer with excellent tracking to a dielectric layer.

Furthermore, the present inventors have also proposed that these organopolysiloxane cured material films can be used for base materials and electrode layers with low tracking properties. For example, Patent Documents 1 and 2 propose that an organopolysiloxane cured material film can be sandwiched between film base materials and used as a pressure-sensitive adhesive layer or a dielectric layer. However, there is still room for improvement in the fabrication and use of an organopolysiloxane cured material film laminate body, because pressure sensitive adhesion and surface treatment or the like of the base material are not sufficient to provide adhesion at each interface, and thus the process is inefficient.

**RELATED ART DOCUMENTS**

**[Non-Patent Documents]**

Non-Patent Document 1: Kujawski, M.; Pearse, J. D.; Smela, E. Carbon 2010, 48, 2409-2417.
Non-Patent Document 2: Rosset, S.; Shea, H. R. Appl. Phys. A 2013, 110, 281-307.

**Patent Documents**

Patent Document 1: International Patent Application Publication (WO) 2016/098334
Patent Document 2: International Patent Application Publication (WO) 2016/163069

**SUMMARY OF THE INVENTION**

**PROBLEM TO BE SOLVED BY THE INVENTION**

In view of the foregoing, an object of the present invention is to provide a laminate body in which an organopolysiloxane cured material film with improved adhesion between a dielectric layer and an electrode layer or a base material layer is laminated, and where problems such as peeling and defects due to insufficient adhesive strength and tracking do not easily occur at an interface between the cured material films forming the laminate body, and to provide a use and manufacturing method thereof.

**MEANS FOR SOLVING THE PROBLEM**

After careful consideration, the present inventors found that the above object can be achieved when the value of $p_{x1}$, a parameter that determines the crosslink density in the organopolysiloxane composition, and more preferably, the value of the mass% of reinforcing filler ($w_f$) in the composition, is within a specific range, and thus arrived at the present invention.

Specifically, the aforementioned object can be achieved by a curable organopolysiloxane composition for a transducer, comprising at least:

(A) one or more organopolysiloxane having at least two alkenyl groups having 2 to 12 carbon atoms in one molecule;
(B1) an organohydrogenpolysiloxane having at least one silicon atom-bonded hydrogen atom in a side chain moiety of a molecular chain, no silicon atom-bonded hydrogen atom at least at one end of the molecular chain, and at least two silicon atom-bonded hydrogen atoms in the molecule;
(B2) an organohydrogenpolysiloxane having a silicon atom-bonded hydrogen atom at both terminals of the molecular chain and at least two silicon-bonded hydrogen atoms in a molecule;
(C) an effective amount of a hydrosilylation reaction catalyst;
(D) reinforcing filler; and
(E) adhesion imparting agent,

wherein if

($H_{B1}$) represents the number of silicon atom-bonded hydrogen atoms in component (B1),
($H_{B2}$) represents the number of silicon atom-bonded hydrogen atoms in component (B2), and
(Vi) represents a total number of curing reactive groups containing a carbon-carbon double bond in component (A),
a value of $p_{x1}$ as defined by the following relational formula:

$$p_{x1} = \{H_{B1}/H_{B2}\}/\{(H_{B1}+H_{B2})/Vi\}$$

is within a range of 0.1 to 6.0.

Herein, if the total amount of components (A) to (E) is 100% by mass, the amount ($w_f$) of component (D) is preferably within a range of 5 to 40% by mass, and particularly preferably, at least a portion of component (A) is (A1) one or more organopolysiloxane containing a fluoroalkyl group which is a fluoroalkyl group having 2 to 12 alkenyl groups in a molecule, where 10 mol% or more of all substitution groups on a silicon atom is expressed by $(C_pF_{2p+1})$-R- (where R is an alkylene group having 1 to 10 carbon atoms, and p is an integer from 1 to 8).

Furthermore, the above object is suitably achieved by a film cured material for transducers, which is cured from the aforementioned composition, a laminate body having a structure including one or more layers selected from the film cured material for transducers, the electrode layer, and the base material layer, and a transducer containing the aforementioned laminate body, and the like.

**EFFECT OF THE INVENTION**

The present invention provides a laminate body in which an organopolysiloxane cured material film with improved adhesion between a dielectric layer and an electrode layer or a base material layer is laminated, and where problems such as peeling and defects due to insufficient adhesive strength and tracking do not easily occur at an interface between the cured material films forming the laminate body, and provides a use and manufacturing method thereof.

In particular, the curable organopolysiloxane composition for transducers of the present invention can efficiently manufacture a laminate body where the cured material film and the electrode layer and/or base material layer are adhered with sufficient strength for practical use without requiring an additional adhesion step or processing, by forming a laminate body having an adhered structure by at least partially forming a chemical bond at an interface of the two layers, and by applying and curing the pre-cured composition on at least one surface of the electrode layer or the base material layer, and has the advantage that a laminate body with excellent reliability for transducer applications and a manufacturing method can be provided.

## DESCRIPTION OF THE PREFERRED EMBODIMENTS

First, the curable organopolysiloxane composition for transducers of the present invention will be described below in detail. Hereinafter, the term "transducer" as used herein refers to all electronic devices that have the ability to mutually convert mechanical and electrical energy, a concept that includes sensors, speakers, actuators, and generators. The curable organopolysiloxane composition of the present invention provides favorable properties before and after curing when a cured material, and particularly a cured material film is suitable for use as a member of the aforementioned transducer.

The composition of the present invention includes at least:

(A) one or more organopolysiloxane having at least two alkenyl groups having 2 to 12 carbon atoms in one molecule;
(B1) an organohydrogenpolysiloxane having at least one silicon atom-bonded hydrogen atom in a side chain moiety of a molecular chain, no silicon atom-bonded hydrogen atom at least at one end of the molecular chain, and at least two silicon atom-bonded hydrogen atoms in the molecule;
(B2) an organohydrogenpolysiloxane having a silicon atom-bonded hydrogen atom at both terminals of the molecular chain and at least two silicon-bonded hydrogen atoms in a molecule;
(C) an effective amount of a hydrosilylation reaction catalyst;
(D) reinforcing filler;
(E) adhesion imparting agent; and optionally
a hydrosilylation reaction inhibitor, other organic solvents, and other optional additives.

The composition of the present invention is a hydrosilylation reaction-cured composition with an alkenyl group and silicon atom-bonded hydrogen atoms, and has the advantages of relatively rapid overall curing and easy control of the reaction. The curing reaction proceeds with heat, irradiation with high energy radiation, or a combination thereof.

The aforementioned component (A) is an organopolysiloxane having a curing reactive group containing a carbon-carbon double bond, with examples including organopolysiloxanes in straight chain, branched chain, cyclic, or resinous (network) organopolysiloxanes containing a curing reactive group in a molecule, selected from vinyl groups and other alkenyl groups with 2 to 20 carbon atoms, 3-acryloxypropyl groups, 3-methacryloxypropyl groups, and other (meth)acryl groups.

The organopolysiloxane serving as component (A) may contain a group selected from monovalent hydrocarbon groups that do not have a carbon-carbon double bond in a molecule, hydroxyl groups, and alkoxy groups with 1 to 3 carbon atoms. Furthermore, the monovalent hydrocarbon group may have some hydrogen atoms partially substituted with a halogen atom or hydroxyl group, and when used as a dielectric layer, the dielectric functional group described later may be introduced. Methyl groups, phenyl groups, hydroxyl groups, alkoxy groups, and dielectric functional groups as described later are industrially preferred. Note that when component (A) contains a hydroxyl group or the like, the component has condensation reactivity in addition to hydrosilylation reaction curability.

When used in a dielectric layer, preferably, component (A) may be an organopolysiloxane expressed by the following average composition formula:

$$R^1{}_aR^2{}_bSiO_{(4-a-b)/2}$$

or a mixture thereof.
In the formula, $R^1$ represents a curing reactive group containing a carbon-carbon double bond,
$R^2$ represents a group selected from monovalent hydrocarbon groups that do not have a carbon-carbon double bond, hydroxyl groups, and alkoxy groups, and
a and b represent numbers satisfying the following conditions: $1 \leqq a+b \leqq 3$ and 0.001 & a/(a+b) & 0.33, preferably numbers satisfying the following conditions: 1.5 & a+b & 2.5 and 0.005 & a/(a+b) & 0.2. This is because the flexibility of the cured material increases when a+b are above the lower limit of the aforementioned range, while the mechanical strength of the cured material increases when a+b are below the upper limit of the range; therefore, the mechanical strength of the cured material increases when a/(a+b) is above the lower limit of the range, while flexibility of the cured material increases when a/(a+b) is below the upper limit of the range.

When using component (A), the amount of curing reactive groups including carbon-carbon double bonds such as alkenyl groups or the like (Vi) in component (A) must be selected or designed such that the value of $p_{x1}$, a parameter related to the cross-link density and cross-link structure of the composition described below is within a range of 0.1 to 6.0, preferably 0.5 to 6.0, more preferably 1.0 to 6.0, and particularly preferably within a range of 1.5 to 5.5.

Component (A) in the present invention can and preferably does introduce a fluoroalkyl group expressed by

$(C_pF_{2r+1})$-R-

(where R is an alkylene group with 1 to 10 carbon atoms and p is an integer between 1 and 8, inclusively) as a dielectric functional group in the molecule. In terms of the dielectric properties, economy, ease of manufacturing, and moldability of the obtained curable organopolysiloxane composition, a group in which p = 1, in other words, a trifluoropropyl group, is preferable.

Preferably, component (A) is an organopolysiloxane containing a fluoroalkyl group where at least a portion or all of the fluoroalkyl groups are: (A1) one or more fluoroalkyl groups having at least two alkenyl groups having 2 to 12 carbon atoms per molecule, wherein 10 mol% or more of all substituent groups on the silicon atoms are fluoroalkyl groups expressed by $(C_pF_{2p+1})$-R- (where R is an alkylene group having 1 to 10 carbon atoms and p is an integer between 1 and 8, inclusively). A fluoroorganopolysiloxane cured material film with excellent dielectric properties can be obtained by using component (A1) as a main component.

Furthermore, if a cured material film made by curing the present composition is used in the dielectric layer of the transducer, Component (A) of the present invention is particularly preferably a fluoroorganopolysiloxane or a mixture thereof containing:

(a1-1) a straight chain or branched chain fluoroorganopolysiloxane having an alkenyl group only at an end of a molecular chain; and optionally

(a1-2) a fluoroorganopolysiloxane resin containing an alkenyl group having at least one branched siloxane unit in a molecule with an amount of vinyl ($CH_2$=CH-) groups within a range of 1.0 to 5.0 mass%.

Component (a1-1) is a straight chain or branched chain fluoroorganopolysiloxane having a siloxane unit expressed by

$$(Alk)R^2_2SiO_{1/2}$$

(where Alk represents an alkenyl group having two or more carbon atoms) at an end of a molecular chain, and where other siloxane units are essentially only a siloxane unit expressed by $R^2_2SiO_{2/2}$. It should be noted that R2 represents the same groups as described above. Furthermore, the degree of siloxane polymerization of component (a1-1) is within a range of 7 to 1002 including terminal siloxane units, but may be within a range of 102 to 902. Such a component (a1-1) is particularly preferably a straight chain fluoroorganopolysiloxane where both ends of a molecular chain are blocked with a siloxane unit expressed by $(Alk)R^2_2SiO_{1/2}$. Component (a1-2) is a fluoroorganopolysiloxane resin containing an alkenyl group, and an example thereof includes a fluoroorganopolysiloxane resin containing an alkenyl group expressed by the following formula.

Average unit formula:

$$(RSiO_{3/2})o(R_2SiO_{2/2})p(R_3SiO_{1/2})q(SiO_{4/2})r(XO_{1/2})s$$

In the formula, R represents a group selected from alkenyl groups and monovalent hydrocarbon groups that do not have a carbon-carbon double bond, while X represents a hydrogen atom or an alkenyl group having 1 to 3 carbon atoms. However, of all Rs, R is an alkenyl group at least in a range where the amount of vinyl ($CH_2$=CH-) groups in the fluoroorganopolysiloxane resin satisfies a range of 1.0 to 5.0 mass%, and at least a portion of Rs in the siloxane unit expressed by $R_3SiO_{1/2}$ are particularly preferably alkenyl groups.

In the formula, (o + r) is a positive integer, p is 0 or a positive integer, q is 0 or a positive integer, s is 0 or a positive integer, p/(o + r) is a number within a range of 0 to 10, q/(o + r) is a number within a range of 0 to 5, (o + r)/(o + p + q + r) is a number within a range of 0.3 to 0.9, and s/(o + p + q + r) is a number within a range of 0 to 0.4.

A particularly preferable example of component (a1-2) includes an MQ organopolysiloxane resin containing an alkenyl group expressed by

$$\{(Alk)R_2^2SiO1/2\}q1(R^2_3SiO_{1/2})q2(SiO_{4/2})r$$

(where Alk and $R^2$ represent the same groups as described above, q1+q2+r is a number within a range of 50 to 500, (q1+q2)/r is a number within a range of 0.1 to 2.0, and q2 is a number of a range where the number of vinyl (CH=CH-) groups in the fluoroorganopolysiloxane resin satisfies a range of 1.0 to 5.0).

Using component (a1-1) with an alkenyl group only at an end of the molecular chain and component (a1-2) as a fluoroorganopolysiloxane resin, having a certain number of alkenyl groups can provide a curing reaction product with excellent curability as an entire composition and having excellent flexibility and mechanical strength, and can provide a fluoroorganopolysiloxane cured material film that is particularly suitable for an adhesive layer or dielectric layer in the aforementioned electronic components and the like.

Component (B) is an organohydrogenpolysiloxane having at least two silicon-bonded hydrogen atoms in a molecule and is a component that functions as (B1) a crosslinking agent, or (B2) a chain extender, for component (A). Specifically, component (B1) is an organohydrogenpolysiloxane having at least one silicon atom-bonded hydrogen atom on a side chain moiety of the molecular chain, no silicon atom-bonded hydrogen atoms on at least one end of the molecular chain, and at least two silicon atom-bonded hydrogen atoms within the molecule. Component (B1) is distinguished from component (B2) by not having a silicon atom-bonded hydrogen atom, and preferably has a structure in which both ends of the molecular chain are sealed with functional groups that are non-reactive to the hydrosilylation reaction (especially the reaction with component (A) described above). Component (B1) has hydrogen atoms bonded to the silicon atoms forming the main chain of the siloxane molecule (= hydrogen atoms bonded to side chain moieties), so an intermolecular crosslink structure is formed between the hydrogen atoms on the side chain and the curing reactive groups in component (A), while the chain length extension effect of the crosslinked material is limited. On the other hand, Component (B2) is an organohydrogenpolysiloxane having a silicon atom-bonded hydrogen atom on both ends of the molecular chain, and at least two silicon atom-bonded hydrogen atoms in the molecule, but preferably has 2 silicon atom-bonded hydrogen atoms (=only on both terminals of the molecular chain). Component (B2) is a chain-length extender that reacts with the curing-reactive groups in component (A) to introduce a long siloxane molecular structure into the cross-linked material, which can give the cross-linked material moderate flexibility and elasticity.

Examples of component (B1) include 1,1,3-3-tetramethyldisiloxane, 1,3,5,7-tetramethyl cyclotetrasiloxane, tris(dimethylhydrogensiloxy)methylsilane, tris(dimethylhydrogensiloxy)phenylsilane, methylhydrogenpolysiloxanes blocked at both ends of a molecular chain with a trimethylsiloxy group, dimethylsiloxane/methylhydrogensiloxane copolymers blocked at both ends of a molecular chain with a trimethylsiloxy group, methylhydrogensiloxane and phenylsiloxane copolymers blocked at both ends of a molecular chain with a trymethylsiloxy group, methylhydrogensiloxane, diphenyl siloxane, and dimethyl siloxane copolymers blocked at both ends of a molecular chain with a trimethylsiloxane group, methylhydrogensiloxane/dimethylsiloxane/trifluoropropylmethylsiloxane copolymers blocked at both ends of a molecular chain with a trimethylsiloxy group, methylhydrogensiloxane/diphenylsiloxane/dimethylsiloxane copolymers blocked at both ends of a molecular chain with a trimethylsiloxy group, hydrolytic condensates of trimethoxysilane, copolymers containing $(CH_3)_2HSiO_{1/2}$ units and $SiO_{4/2}$ units, copolymers containing $(CH_3)_2HSiO_{1/2}$ units, $SiO_{4/2}$ units, and $(C_6H_5)SiO_{3/2}$ units, and mixtures of two or more types thereof.

Examples of component (B2) include dimethylsiloxanes blocked at both ends of a molecular chain with dimethylhydrogensiloxy groups, dimethylsiloxane-diphenylsiloxane copolymers blocked at both ends of a molecular chain with dimethylhydrogensiloxy groups, dimethylsiloxane/trifluoropropylmethylsiloxane copolymers blocked at both ends of a molecular chain with dimethylhydrogensiloxy groups, dimethylsiloxane/trifluoropropylmethylsiloxane copolymers blocked at both ends of a molecular chain with dimethylhydrogensiloxy groups, and mixtures of two or more types of these.

[Parameter $p_{x1}$]

The curable organopolysiloxane composition for transducers according to the present invention has a value where Mw(a) divided by a value of $p_{x1}$, defined by the following parameter, is within a prescribed range with regard to Component (A), Component (B1), and Component (B2). $p_{x1}$ is a parameter for describing the crosslink density and intermolecular crosslink structure of the cured material obtained by curing the composition, where if:

    ($H_{B1}$) represents the number of silicon atom-bonded hydrogen atoms in component (B1),
    ($H_{B2}$) represents the number of silicon atom-bonded hydrogen atoms in component (B2), and
    (Vi) represents a total number of curing reactive groups containing a carbon-carbon double bond in component (A),
    a value of $p_{x1}$ as defined by the following relational formula:

$$p_{x1} = \{H_{B1}/H_{B2}\}/\{(H_{B1}+H_{B2})/Vi\}$$

and the type and amount of component (A), component (B1), and component (B2) used should be in an amount that results in a $p_{x1}$ value in the range of 0.1 to 6.0. It should be noted that from the viewpoint of the performance of the cured material made by curing the present composition, especially the cured material film, as a transducer component, and the adhesion to the base material layer or electrode layer, the $p_{x1}$ value is preferably in a range of 0.5 to 6.0, more preferably in a range of 1.0 to 6.0, and particularly preferably in a range of 1.5 to 6.0. On the other hand, if the value of $p_{x1}$ is outside of the aforementioned upper limit, the adhesive properties of the cured material will deteriorate, and the storage modulus will not be suitable for the object of the present invention. On one hand, if the value of $p_{x1}$ is less than the lower limit mentioned above, the cross-linking or curing reaction may be insufficient.

The technical significance of $p_{x1}$ will be described. The present composition contains two types of organohydrogenpolysiloxanes, component (B1) functions as a cross-linking agent, and component (B2) functions as a chain length extender. $\{H_{B1}/H_{B2}\}$ represents the ratio of Si-H in the crosslinking agent and the chain length extender, and when this ratio is within a specific range, a crosslinked structure is formed with a moderately long intermolecular distance between the curing reactive groups in component (A), thus providing a moderate hardness and rubber-like storage modulus. Furthermore, if the range of the value of $p_{x1}$, which is divided back by the value of $(H_{B1}+ [H_{B2})/Vi$, indicating the "SiH/Vi ratio," for the composition as a whole, is in the range of 0.1 to 6.0, the storage modulus of the film cured material, which is the cross-linked product, as well as the tracking and adhesion to the thermoplastic and electrode layers are improved. Furthermore, in the present invention, both layers can have a chemically bonded structure due to the adhesive imparting agent that is component (E).

It should be noted that the amount of component (B1) and component (B2) used must meet the above-mentioned range, and is preferably an amount in which the sum of the silicon-bonded hydrogen atoms of component (B1) and component (B2) per mole of carbon-carbon double bonds in component (A) is in a range of 0.1 to 10 mol, preferably an amount in a range of 0.5 to 2.5 mol, and particularly preferably an amount in a range of 0.5 to 2.0 mol.

Component (C) is a catalyst that promotes a hydrosilylation reaction between component (A) and component (B). Examples include platinum based catalysts, rhodium based catalysts, palladium based catalysts, nickel based catalysts, iridium based catalysts, ruthenium based catalysts, and iron based catalysts. Platinum based catalysts are preferable. Exemplary platinum-based catalysts include platinum fine powder, chloroplatinic acid, an alcohol solution of chloroplatinic acid, a platinum-alkenyl siloxane complex, a platinum-olefin complex, a platinum-carbonyl complex, and a catalyst in which these platinum-based catalysts are dispersed or encapsulated with a thermoplastic resin such as silicone resin, polycarbonate resin, acrylic resin, or the like, with a platinum-alkenyl siloxane complex particularly preferable. In particular, a 1,3-divinyl-1,1,3,3-tetramethyldisiloxane complex of platinum is preferred, and is preferably added in the form of an alkenylsiloxane solution of the complex. In addition, in terms of improving the handleability as well as the pot life of the composition, a platinum containing hydrosilylation reaction catalyst in microparticles dispersed and encapsulated with thermoplastic resin may be used. Note that as the catalyst for promoting the hydrosilylation reaction, a non-platinum-based metal catalyst such as iron, ruthenium, iron/cobalt, or the like may be used.

Furthermore, a hydrosilylation reaction catalyst, which is component (C), is a hydrosilylation reaction catalyst which does not exhibit activity without irradiation with a high energy beam, but exhibits activity in the composition by irradiation with a high energy beam, or is a so-called high energy beam activation catalyst or photoactivation catalyst. By using such a component (C), the composition as a whole can be cured even at low temperatures triggered by irradiation with a high energy beam, has excellent storage stability, and facilitates reaction control; thus, the properties of excellent handling workability can be achieved.

Examples of high energy beams include UV rays, gamma rays, X-rays, alpha rays, electron beams, and the like. In particular, examples include ultraviolet rays, X-rays, and electron beams irradiated from a commercially available electron beam irradiating device. Of these, ultraviolet rays are preferable from the perspective of efficiency of catalyst activation, and ultraviolet rays within a wavelength range of 280 to 380 nm are preferable from the perspective of industrial use. Furthermore, the irradiation dose varies depending on the type of high energy beam activated catalyst, but in the case of ultraviolet light, the integrated irradiation dose at a wavelength of 365 nm is preferably within a range of 100 $mJ/cm^2$ to 100 $J/cm^2$.

Specific examples of component (C) include (methylcyclopentadienyl) trimethyl platinum (IV), (cyclopentadienyl) trimethyl platinum (IV), (1,2,3,4,5-pentamethyl cyclopentadienyl) trimethyl platinum (IV), (cyclopentadienyl) dimethylethyl platinum (IV), (cyclopentadienyl) dimethylacetyl platinum (IV), (trimethylsilyl cyclopentadienyl) trimethyl platinum (IV), (methoxycarbonyl cyclopentadienyl) trimethyl platinum (IV), (dimethylsilyl cyclopentadienyl) trimethylcyclopentadienyl platinum (IV), trimethyl (acetylacetonato) platinum (IV), trimethyl (3,5-heptanedionate) platinum (IV), trimethyl (methylacetoacetate) platinum (IV), bis(2,4- pentanedionato) platinum (II), bis(2,4-hexanedionato) platinum (II), bis(2,4-heptanedionato) platinum (II), bis(3,5-heptanedionato) platinum (II), bis(1 -phenyl-1,3-butanedionato) platinum (II), bis(1,3-diphenyl-1,3-propanedionato) platinum (II), and bis(hexafluoroacetylacetonato) platinum (II). Of these, (methylcyclopentadienyl) trimethyl platinum (IV) and bis(2,4-pentanedionato) platinum (II) are preferred from the perspective of versatility and ease of acquisition.

The amount of component (C) used is an effective amount and is not particularly limited so long as the amount promotes curing of the curable organopolysiloxane composition of the present invention. Specifically, in mass units, metal atoms in the catalyst are of an amount within a mass unit range of 0.01 to 1,000 ppm, and preferably, the platinum metal atoms in component (C) are of an amount within a range of 0.1 to 500 ppm, with regard to the sum (100 mass% as a whole) of components (A) to (C). This is because when the amount of component (C) is less than the lower limit of the aforementioned range, curing may be insufficient. Moreover, exceeding the upper limit of the range may be uneconomical and potentially adversely affect transparency, such as by coloring of the obtained cured material and the like.

The curable organopolysiloxane composition according to the present invention contains a reinforcing filler. When the present composition is cured to obtain a cured material film for a transducer, which is a dielectric layer, the reinforcing filler, component (D), preferably is at least partly made of inorganic oxide particles represented by silica, and preferably includes reinforcing filler which is component (D), or a composite thereof where one or more type are surface treated with an organic silica compound and have different average BET specific surface areas, in an amount that is within a certain range with regards to the sum of the non-volatile solid fraction formed by the curing reaction in the composition (in other words, the some of components (A) to (E)).

Herein, from the perspective of the mechanical strength of the cured material, the reinforcing microparticles are preferably one or more types of reinforcing inorganic microparticles having an average primary particle size of less than 50 nm. Examples include fumed silica, wet silica, pulverized silica, calcium carbonate, diatomaceous earth, finely pulverized quartz, various metal oxide powders other than alumina and zinc oxides, glass fibers, carbon fibers, and the like, and those treated with one or more types of organic silicon compounds described below are used. The shape thereof is not particularly limited, with arbitrary shapes including a particle shape, plate shape, needle shape, fibrous shape, and the like capable of being used.

Preferred examples thereof include: hydrophilic or hydrophobic fumed silica or metal oxide composites thereof, which have an average primary particle size that is 10 nm or less, are partially aggregated, and have BET specific surface areas that are mutually different as described later, from the perspective of improving the mechanical strength of the dielectric layer. Furthermore, in terms of improving dispersibility, the fumed silica or metal oxide composite thereof is preferably treated with silazane or a silane coupling agent described later. Two or more types of the reinforcing inorganic particles may be used in combination.

In the present invention, the reinforcing fillers used in the dielectric layer include:

(D1) reinforcing fine particles or a composite thereof having an average BET specific surface area of greater than 100 m$^2$/g that are surface treated with one or more types of organic silicon compounds; and
(D2) reinforcing fine particles or a composite thereof having an average BET specific surface area within a range of 10 to 100 m$^2$/g that are surface treated with one or more types of the organic silicon compounds.

Furthermore, the mass ratio of component (D1) and component (D2) is within a range of 50:50 to 99:1, may be within a range of 70:30 to 97:3, and is preferably within a range of 70:30 to 95:5. If the mass ratio is out of the range, the viscosity of the curable fluoroorganopolysiloxane composition before curing may increase, and the mechanical strength and dielectric breakdown strength after curing may decrease.

When reinforcing filling materials, which are the aforementioned components (D1) and (D2), are added into the composition, the dynamic strength and dielectric breakdown strength of the organopolysiloxane cured material obtained by curing the curable organopolysiloxane composition according to the present invention can be increased.

[Amount of component (D) (Wf)]

In the composition of the present invention, the amount (Wf) of component (D) is preferably within a range of 5 to 40% by mass, particularly preferably within a range of 10 to 30% by mass, based on a total of components (A) to (E) being 100% by mass, which is the sum of the components forming the non-volatile solid fraction due to the curing reaction. Although deformability and moderate resilience are required for dielectric films in transducer applications, if the amount of component (D) (Wf) exceeds the above upper limit, the viscosity of the composition will tend to increase, and the high viscosity may cause difficulty when applying uniformly as a thin film. Furthermore, the storage modulus after curing tends to increase and may be too hard, so performance in transducer applications may not be fully realized. On the other hand, below the lower limit of the above mass% range, the physical properties of the curable organopolysiloxane composition after curing may be insufficient.

More preferably, the sum of components (D1) and (D2) may be in a range of 5 to 40% by mass, preferably 5.0 to 35% by mass, and particularly preferably 6.5 to 30% by mass, when the total of components (A) through (E) is 100% by mass. If the upper limit of the above mass% range is exceeded, uniform and thin film application may be difficult, and the storage modulus after curing will be high. Below the lower limit of the mass% range, the physical properties of the curable organopolysiloxane composition after curing may be insufficient.

The reinforcing filling materials, which are components (D1) and (D2) described above, are preferably surface treated with one or more type of organic silicon compounds. The surface treatment using the organic silicon compound is a hydrophobizing treatment, and a reinforcing filler surface-treated by the organic silicon compound can be uniformly dispersed in the fluoroorganopolysiloxane composition at a high filling ratio. Furthermore, an increase in the viscosity of the composition is inhibited, thereby improving moldability.

Examples of organic silicon compounds include: low molecular weight organic silicon compounds such as silanes, silazanes, siloxanes, and the like; and organic silicon polymers or oligomers such as polysiloxanes, polycarbosiloxanes, and the like. The organic silicon compound used for surface treatment most preferably contains at least one or more types selected from hexamethyldisilazane and 1,3-bis(3,3,3-trifluoropropyl)-1,1,3,3-tetramethyldisilazane.

The amount of the surface treating agent with regard to the total amount of the filler in the surface treatment is preferably within a range of 0.1 mass% or more and 50 mass% or less, and more preferably within a range of 0.3 mass% or more and 40 mass% or less. Note that the treatment amount is preferably the feed ratio of fillers to the surface treating agent, with excess treating agents preferably removed following treatment. Furthermore, there is no problem in using additives and the like that promote or assist a reaction when treating if necessary.

In the surface treatment, whether or not the components of the surface treating agent are chemically or physically fixed to the surface of the filler is an important parameter. For example, the fixed amount of the surface treating agent can be analyzed by reacting a composition containing a filler with excess tetraethoxysilane under alkaline conditions, then detecting the reaction material via gas chromatography. The component amount of the surface treating agent fixed to the filler surface described above is preferably 1.0 mass part or more, more preferably 3.0 mass parts or more, relative to 100 mass parts of the filler amount. Of these, when two types of organic silicon compounds used for the surface treatment of components (D1) and (D2) according to the present invention are hexamethyldisilazane and 1,3-bis(3,3,3-trifluoropropyl)-1,1,3,3-tetramethyldisilazane, the ratio of fixation on the filler surface can be changed as needed. For example, in the present invention, a fluoroalkyl group expressed by $(C_pF_{2p+1})$-R- (R represents an alkylene group having 1 to 10 carbon atoms, and p represents an integer of 1 to 8) can be introduced as the high dielectric functional group to a portion or all of component (A) or components (B1) (B2), as described above. In terms of the dielectric properties, economy, ease of manufacturing, and moldability of the obtained curable fluoroorganopolysiloxane composition, a group in which p = 1, in other words, a trifluoropropyl group, is preferable. In this case, the weight ratio of the treatment components derived from hexamethyldisilazane and 1,3-bis(3,3,3-trifluoropropyl)-1,1,3,3-tetramethyldisilazane fixed to the filler surface is between 0 and 10, inclusive. When outside of this range, the affinity between component (A) or component (B) and the filler surface may be inferior, and thus the processability and physical properties after curing may be reduced.

[Other Functional Fillers]

In the curable fluoroorganopolysiloxane composition according to the present invention, other filling materials may or may not be used as desired, with examples including highly dielectric fillers, thermally conductive inorganic particles, insulating fillers, and the like. The inorganic microparticles may have two or more functions, such as a reinforcing filling material function or the like.

Examples of preferred dielectric inorganic fine particles include one or more inorganic fine particles selected from a group consisting of composite metal oxides in which a portion of barium and titanium sites of titanium oxide, barium titanate, strontium titanate, lead zirconate titanate, and barium titanate are substituted with calcium, strontium, yttrium, neodymium, samarium, dysprosium, or other alkaline earth metal, zirconium, or rare earth metals. Titanium oxide, barium titanate, zirconate titanate barium calcium, and strontium titanate are more preferable, with titanium oxide and barium titanate even more preferable. Specifically, at least a portion of the dielectric inorganic fine particles are particularly preferably dielectric inorganic fine particles with a specific dielectric constant at room temperature at 1 kHz of 10 or more. Note that the upper limit of the preferable size (average primary particle size) of the inorganic fine particles is 20,000 nm (20 μm), but more preferably 10,000 nm (10 μm), taking into consideration the processability into a thin film for a transducer described later. Using the dielectric inorganic fine particles may further improve the mechanical properties and/or the electrical properties, particularly the specific dielectric constant, of the fluoroorganopolysiloxane cured material.

Insulating inorganic fine particles that can be used in the present invention are not limited so long as the insulating inorganic materials are generally known, in other words, particles of inorganic materials having a volume resistivity of $10^{10}$ to $10^{18}$ Ω·cm. The shape thereof can be any shape such as a particle shape, flake shape, or fiber shape (including whiskers). Specific examples thereof include ceramic spherical particles, plate shaped particles, and fibers. Preferably used examples thereof include metal silicates such as alumina, iron oxide, copper oxide, mica, talc, and the like, and particles such as quartz, amorphous silica, glass, and the like. Furthermore, these may be treated with various surface treating agents described later. These may be used independently or two or more may be used in combination. When the insulating inorganic fine particles are added to the composition, the dynamic strength and dielectric breakdown strength of the fluoroorganopolysiloxane cured material can be increased, with an increase in the specific dielectric constant also potentially being observed.

Examples of thermally conductive inorganic fine particles that can be used in the present invention include: metal oxide particles such as magnesium oxide, zinc oxide, nickel oxide, vanadium oxide, copper oxide, iron oxide, silver oxide, and the like; and inorganic compound particles such as aluminum nitride, boron nitride, silicon carbide, silicon nitride, boron carbide, titanium carbide, diamond, diamond-like carbon, and the like. Zinc oxide, boron nitride, silicon carbide, and silicon nitride are preferable. When one or more of the thermally conductive inorganic fine particles is added to the composition, the thermal conductivity of the fluoroorganopolysiloxane cured material can be increased.

The average particle size of the inorganic particles can be measured by a normal measurement method that is used in the field. For example, if the average particle size is approximately 50 nm or larger and 500 nm or less, the particle size is measured by observation using a microscope such as a transmission type electron microscope (TEM), a field emission type transmission electron microscope (FE-TEM), a scanning type electron microscope (SEM), a field emission type scanning electron microscope (FE-SEM), or the like, allowing the average value to be obtained as a measure of the average primary particle size. Meanwhile, if the average particle size is approximately 500 nm or more, the value of the average primary particle size can be directly obtained using a laser diffraction/scattering type particle size distribution measuring device or the like.

The curable organopolysiloxane composition of the present invention contains (E) an adhesion imparting agent. In particular, the composition in the present invention is cured to provide a cured material having a specific crosslink density and intermolecular crosslink structure, wherein the addition of an adhesion imparting agent may form a chemical bond on the surface of the base material layer or electrode layer to which the composition is applied, and may provide strong adhesion and tracking properties. On the other hand, if the value of the parameter $p_{x1}$ for crosslink density/crosslink structure described earlier does not meet the aforementioned range, the adhesion to the base material layer or the like may not be sufficiently improved even for cured materials containing adhesion imparting agents.

The amount of (E) adhesion imparting agent used can be appropriately designed according to the desired adhesion strength, type of base material layer or electrode layer, or the like. However, from the perspective of achieving a practically sufficient level of adhesion strength and tracking to a base material layer or electrode layer made of thermoplastic resin such as polyethylene terephthalate (PET), the amount of component (E) is preferably 0.1% to 10% by mass, preferably 0.25% to 5.0% by mass, and particularly preferably 0.5 to 2.0% by mass, based on a total of components (A) to (E) constituting 100% by mass of the composition.

As the adhesion imparting agent, an organic silicon compound having at least one alkoxy group bonded to a silicon atom in one molecule is preferable. Examples of this alkoxy group include a methoxy group, an ethoxy group, a propoxy group, a butoxy group, and a methoxyethoxy group, with a methoxy group particularly preferable. Moreover, examples of groups other than alkoxy groups, bonded to the silicon atom of the organic silicon compound include: halogen substituted or unsubstituted monovalent hydrocarbon groups such as an alkyl group, an alkenyl group, an aryl group, an aralkyl group, and a halogenated alkyl group; glycidoxyalkyl groups such as a 3-glycidoxypropyl group and a 4-glycidoxybutyl group; epoxycyclohexylalkyl groups such as a 2-(3,4-epoxycyclohexyl)ethyl group and a 3-(3,4-epoxycyclohexyl)propyl group; epoxyalkyl groups such as a 3,4-epoxybutyl group and 7,8-epoxyoctyl groups; acryl group-containing monovalent organic groups such as 3-methacryloxypropyl groups; and hydrogen atoms. This organic silicon compound preferably has a group that may react with an alkenyl group or a silicon-bonded hydrogen atom in this composition, and specifically, preferably has a silicon-bonded hydrogen atom or an alkenyl group. Moreover, because favorable adhesion can be imparted to various base materials, this organic silicon compound preferably has at least one epoxy group-containing monovalent organic group per molecule.

Examples of such an organic silicon compound include an organosilane compound, an organosiloxane oligomer, and an alkyl silicate. Examples of molecular structures of this organosiloxane oligomer or alkyl silicate include a linear structure, a partially branched linear structure, a branched structure, a cyclic structure, and a network structure, among which a linear structure, a branched structure, and a network structure are particularly preferable. Examples of the organic silicone compound include: silane compounds such as 3-glycidoxypropyltrimethoxysilane, 2-(3,4-epoxycyclohexyl) ethyltrimethoxysilane, and 3-methacryloxypropyltrimethoxysilane; siloxane compounds with at least one of each of a silicon atom-bonded alkenyl group or a silicon-bonded hydrogen atom and a silicon atom-bonded alkoxy group in one molecule; mixtures of a silane compound or siloxane compound having at least one silicon-bonded alkoxy group and a siloxane compound having at least one each of a silicon atom-bonded hydroxy group and silicon atom-bonded alkenyl group in one molecule; reaction mixtures of an amino group-containing organoalkoxysilane and an epoxy group-containing organoalkoxysilane, an organic compound having at least two alkoxysilyl groups containing bonds other than silicon-oxygen bonds between the silyl groups in one molecule; epoxy-group-containing silanes or partial hydrolysis condensates thereof expressed by general formula:

$$R^a{}_nSi(OR^b)_{4-n}$$

(wherein, $R^a$ represents an organic group containing a monovalent epoxy group, and $R^b$ represents an alkyl group having from 1 to 6 carbon atoms, or a hydrogen atom. N represents a number within a range of 1 to 3), reaction mixtures of a vinyl group-containing siloxane oligomer (including a chain or ring shaped structure), and an epoxy group-containing trialkoxysilane, methyl polysilicate, ethyl polysilicate, and epoxy group-containing ethyl polysilicate. The adhesion imparting agent is preferably in the form of a low viscosity liquid, and the viscosity thereof is not limited, but is preferably within the range of 1 to 500 mPa s at 25°C. In addition, while not limited thereto, the content of this adhesion imparting agent is preferably within the range of 0.01 to 10 mass parts with regard to 100 mass parts of the total of the present composition.

In the present invention, an example of a particularly preferable adhesion imparting agent is a reaction mixture of a vinyl group-containing siloxane oligomer (including those with a chain or cyclic structure) and an epoxy group-containing trialkoxysilane.

[Hydrosilylation Reaction Inhibitor]

A hydrosilylation reaction inhibitor is added to suppress crosslinking reactions and chain extending reactions from occurring between components (A) and (B), extend work life at ambient temperature, and improve storage stability. Therefore, for practical purposes, a hydrosilylation reaction inhibitor that inhibits the curable composition of the present invention is a preferable component.

Examples of the hydrosilylation reaction inhibitor include acetylenic compounds, enyne compounds, organic nitrogen compounds, organic phosphorus compounds, and oxime compounds. Specific examples include: alkyne alcohols such as 3-methyl-1-butyne-3-ol, 3,5-dimethyl-1-hexyne-3-ol, 3-methyl-1-pentyne-3-ol, 1-ethynyl-1-cyclohexanol, phenyl butanol, and the like; enyne compounds such as 3-methyl-3-pentene-1-yne, 3,5-dimethyl-1-hexyne-3-yne, and the like; methylalkenylcyclosiloxanes such as 1,3,5,7-tetramethyl-1,3,5,7-tetravinylcyclotetrasiloxane, 1,3,5,7-tetramethyl-1,3,5,7-tetrahexenylcyclotetrasiloxane, and the like; as well as benzotriazoles.

The added amount of the hydrosilylation reaction inhibitor is an amount to effectively extend the working life at normal temperatures of the curable fluoroorganopolysiloxane composition for forming a film according to the present invention and improve the storage stability. Normally, the range is 0.001 to 5 mass% and preferably 0.01 to 2 mass% per 100 mass% of component (A); however, appropriate selection is possible based on the type of the present component, the performance and amount of the platinum based catalyst, the amount of alkenyl groups in component (A), the number of silicon atom-bonded hydrogen atoms in component (B), and the like.

[Use of Solvent]

The curable fluoroorganopolysiloxane composition according to the present invention can be subjected to a curing reaction as is; however, when the composition or a portion of components thereof (for example, fluoroorganopolysiloxane) is a solid or a viscous liquid, an organic solvent can be used if necessary in order to improve the miscibility and handling properties. In particular, when the curable fluoroorganopolysiloxane composition of the present invention is applied in the form of a film, the viscosity may be adjusted using a solvent in a range where the overall viscosity is 100 to 50,000 mPa s, and when diluted with a solvent, use is possible within a range of 0 to 2000 mass parts with regard to the sum (100 mass parts) of components (A) to (C). In other words, in the composition of the present invention, the solvent may be 0 mass parts and the composition is preferably a solvent-free type. In particular, by selecting a polymer with a low degree of polymerization for the curable fluoroorganopolysiloxane composition of the present invention, a solvent-free design is possible, with no residue of a fluorinated solvent, organic solvent, or the like remaining in the film obtained after curing, which has the advantage of eliminating problems in terms of environmental impact and the effects of the solvent on electronic devices. Furthermore, a low-solvent type composition may be used and is preferably of an amount such that the amount of the solvent used is 10 mass parts or less, and preferably 5 mass parts or less, relative to the sum (100 mass parts) of the aforementioned components (A) to (C). Furthermore, in particular, the composition used in the electrode layer may be diluted with a solvent and applied in a thin film by spray application, as in the Embodiments described below.

Preferably used examples of these organic solvents include one or more types of organic solvents selected from

(F1) organic polar solvents,
(F2) low molecular weight siloxane solvents, and
(F3) halogen solvents,

or mixed solvents thereof with a boiling point of 80°C or higher and less than 200°C. Note that the solvent may be a mixed solvent of different organic solvents of different or same type at an arbitrary ratio. Preferably, the organic solvents described contain at least one type of low molecular weight siloxane solvent selected from hexamethyldisiloxane, octamethyltrisiloxane, and mixtures thereof, which are commercially available from Dow Silicones Corporation under the names OS-10, O-20, and OS-2. Furthermore, when the fluoroalkyl group content in the curable elastomer composition is high, the optional use of these low molecular weight siloxane solvents together with the halogen solvents described above is also included in a preferable form of the present invention.

[Viscosity and thixotropy of composition]

The composition of the present invention can be applied to a base material layer or electrode layer, or the like and cured in film form for use, and in particular, when the overall viscosity and thixotropic properties are within a certain range, uniform application to the base material layer, or the like, and improved adhesion and tracking to the base material or electrode layer when cured can be achieved. In particular, compositions having a thixotropic index as defined below and containing an adhesion imparting agent are particularly preferred in that adhesion and chemical bonds at the interface are usually formed.

[Overall Viscosity]

The total viscosity of the curable fluoroorganopolysiloxane composition used in the present invention measured at 25°C and a shear rate of 0.1 (S$^{-1}$) is preferably within a range of 5 to 5,000,000 mPa s, and particularly preferably within a range of 1,000 to 2,500,000 mPa s. In order to achieve the preferred viscosity range, although the amount of the organic solvent used can be adjusted, the composition can be a low-solvent type or solvent-free (solvent-free type).

[Thixotropic Index (TI)]

The curable fluoroorganopolysiloxane composition of the present invention preferably has excellent flowability and exhibits moderate thixotropic behavior. This makes it possible to achieve properties with low overall viscosity and excellent uniformity of application. Specifically, TI, which is a ratio of the viscosity ($\eta_{0.1}$) of the entire composition measured at a shear rate of 0.1 (S$^{-1}$) to the viscosity ($\eta_{10.0}$) of the entire composition measured at a shear rate of 10.0 (S$^{-1}$) (=$\eta_{0.1}/\eta_{10.0}$), of the composition is particularly preferably 250 or less. From the perspective of uniform application, the TI of this composition is especially preferably 100 or less, more preferably in a range of 10 to 80.

[Solid Fraction Amount]

In the curable fluoroorganopolysiloxane composition according to the present invention, the content of the component that cures to form a fluoroorganopolysiloxane cured material, which is a non-volatile solid fraction (in the present invention, simply referred to as the "solid fraction"), is preferably within a range of 5 to 100 mass%, more preferably within the range of 50 to 100 mass%, 75 to 100 mass%, or 85 to 100 mass% of the overall composition.

[Introduction of Dielectric Functional Group]

When the organopolysiloxane cured material film according to the present invention is used as an electroactive film (for example, a dielectric film) used in a transducer such as a sensor, actuator, or the like, a high dielectric functional group may be introduced to the cured material. However, even an organopolysiloxane cured material film that does not contain a high dielectric functional group can be used as an electroactive film. Note that International Patent Application Publication WO2014/105959 and the like by the present applicants propose, for example, introducing high dielectric functional groups and improving the specific dielectric constant.

Introduction of a high dielectric functional group can be performed by using a fluoroorganopolysiloxane or organohydrogenpolysiloxane having a high dielectric functional group as a portion or all of component (A) or component (B), or by adding an organic additive having a high dielectric functional group, a non-reactive organosilicon compound having a high dielectric functional group, or the like to the curable composition. From the perspective of improving miscibility with the curable composition and the specific dielectric constant of the cured material, 10 mol% or more, preferably 20 mol% or more, and more preferably 40 mol% or more of all substitution groups on silicon atoms in the fluoroorganopolysiloxane or organohydrogenpolysiloxane, which is component (A) or component (B), are substituted by a high dielectric functional group. For example, in Component (A), the amount of fluoroalkl groups expressed by ($C_pF_{2p+1}$)-R- (wherein R is an alkylene group having 1 to 10 carbon atoms, while p is an integer of 1 or more and 8 or less) is 10 mol% or more, suitably 20 mol% or more, or more preferably 40 mol% or more of all substituent groups on the silicon atoms.

The type of the high dielectric functional group introduced to the organopolysiloxane cured material film is not particularly limited, and examples include: a) halogen atoms and groups containing a halogen atom as represented by 3,3,3=trifluoropropyl groups and the like; b) groups containing a nitrogen atom as represented by cyanopropyl groups and the like; c) groups containing an oxygen atom as represented by carbonyl groups and the like; d) heterocyclic groups such as imidazole groups and the like; e) groups containing a boron atom such as borate ester groups and the like; f) groups containing phosphorus such as phosphine groups and the like; and g) groups containing a sulfur atom such as thiol groups and the like. Halogen atoms including a fluorine atom and groups containing only a halogen atom are preferably used.

In the present invention, a fluoroalkyl group expressed by ($C_pF_{2p+1}$)-R- (R represents an alkylene group having 1 to 10 carbon atoms, and p represents an integer of 1 to 8) is preferably introduced as the high dielectric functional group to a portion or all of component (A) or component (B). The fluoroalkyl group provides a cured material having an excellent specific dielectric constant, in addition to providing a cured material with excellent transparency because of the components having a fluoroalkyl atom, which improves the compatibility of the components. Specific examples of the fluoroalkyl group include trifluoropropyl groups, pentafluorobutyl groups, heptafluoropentyl groups, nonafluorohexyl groups, undecafluoroheptyl groups, tridecafluorooctyl groups, pentadecafluorononyl groups, and heptadecafluorodecyl groups. Of these, from the perspective of the dielectric properties, economy, ease of manufacturing, and moldability of the obtained curable fluoroorganopolysiloxane composition, a group where p = 1, in other words, a trifluoropropyl group, is preferable.

The curable fluoroorganopolysiloxane composition of the present invention can be prepared by uniformly mixing a curable fluoroorganopolysiloxane and a component promoting a curing reaction, preferably components (A) to (E), and by adding and uniformly mixing another optional component if necessary. Mixing at ambient temperature may be performed using various stirrers or kneaders. Mixing under heat may be performed when combining components that are not cured during mixing.

So long as curing does not occur during mixing, the adding order of the components is not particularly limited. When not used immediately after mixing, a crosslinking agent (for example, component (B1)) and a curing reaction promoting component (for example, component (C)) may be stored separately in a plurality of containers so as to not be present in the same container, with the components in all containers capable of being mixed immediately prior to use.

The curing reaction of the curable fluoroorganopolysiloxane composition according to the present invention proceeds at room temperature for a curing reaction based on condensation reactions such as dehydration, de-alcoholization, and the like. However, when a fluoroorganopolysiloxane cured material film is produced by an industrial production process, the curing reaction is normally achieved by heating the composition or exposing the composition to active energy rays. The curing reaction temperature by heating is not particularly limited, but is preferably 50°C or higher and 200°C or lower, more preferably 60°C or higher and 200°C or lower, and even more preferably 80°C or higher and 180°C or lower. Furthermore, the time for the curing reaction is dependent on the structure of the aforementioned components (A), (B), (C), and (E) and is normally 1 second or more and 3 hours or less. Generally, the cured material can be obtained by being maintained within a range of 90 to 180°C for 10 seconds to 120 minutes. Note that the film manufacturing method will be described later.

Examples of active energy rays that may be used in the curing reaction include ultraviolet rays, electron beams, radiation, and the like. Ultraviolet rays are preferable in terms of practicality. If the curing reaction is performed using ultraviolet rays, a catalyst for the hydrosilylation reaction having high activity to ultraviolet rays is used, for example, a bis(2,4-pentanedionato)platinum complex or a (methylcyclopentadienyl)trimethylplatinum complex is preferably added. The ultraviolet ray generating source is preferably a high pressure mercury lamp, a medium pressure mercury lamp, an Xe-Hg lamp, a deep UV lamp, or the like. The irradiation amount in this case is preferably 100 to 8,000 mJ/cm$^2$.

[Organopolysiloxane cured material]

The cured material made by curing the present composition preferably has a storage modulus (G') in a range of $1.0 \times 10^3$ to $5.0 \times 10^4$ Pa during micro-deformation at 23°C and 0.02 Hz. A value lower than this value may result in reduced strength and workability, while a value higher than this value may result in higher hardness and lower performance as a transducer.

The organopolysiloxane cured material of the present invention is preferably a cured material with excellent specific dielectric constant, in which a high dielectric functional group, represented by a trifluoropropyl group, is introduced as a portion of component (A) or the like. The cured material should be in film form. In particular, the cured material film obtained by curing the composition of the present invention can be suitably used as a dielectric layer in transducers, and a organopolysiloxane cured material film form for transducers (hereinafter sometimes referred to as "cured material film for transducers") is particularly preferred.

[Laminate body and manufacturing method thereof]

The laminate body of the present invention is a transducer or a member for transducers, and has a structure where the film cured material for transducers described above is laminated with one or more layers selected from an electrode layer and a base material layer. Herein, the film cured material for transducers, which is a dielectric layer, may have a structure with electrode layers on both sides (upper and lower layers) thereof, or may have a structure where both sides (upper and lower layers) are sandwiched by base materials, or may have a structure with an electrode layer on one side and a base material layer on the other side.

At the interface between the cured material film for transducers of the present invention and one or more layers selected from the electrode layer and the base material layer, the film is preferably at least partially bonded by chemical bonding, and when an attempt is made to peel off the laminate body, cohesive failure (CF) will preferably occur.

Other layers constituting the laminate body of the present invention may be synthetic resin layers such as thermoplastic resins or the like, metal layers, or silicone cured layers containing conductive particulates, or the like (which are electrode layers and are different from the cured material film for transducers of the present invention). Although not limited in particular, if at least some of the electrode layers and/or base material layers are thermoplastic resin layers (in the case of the electrode layers, thermoplastic resin layers containing conductive particles), the curable organopolysiloxane composition for transducers of the present invention is applied to at least a portion of these layers and cured to form at least partial chemical bonds at the interface of the two layers to form the laminate body. In particular, thermoplastic resin layers, such as PET layers, cannot achieve sufficient bonding/adhesion with ordinary silicone cured layers, which may cause delamination problems when used as a transducer component. However, the cured material film for transducers of the present invention has the advantage of significantly improved performance, reliability, and durability as a transducer component, from the perspective of being able to firmly adhere both members together and achieve a high degree of tracking.

The thermoplastic resin layer that can be used for the laminate body of the present invention is not particularly limited, but examples include thermoplastic resin film layers made of polyethylene terephthalate (PET), polyimide, polyethylene, polypropylene, polystyrene, polyvinyl chloride, polyvinylidene chloride, polycarbonate, cyclopolyolefin, nylon, and the like. When heat resistance is required, a heat-resistant synthetic resin film such as a polyimide, polyetheretherketone, polyethylene naphthalate (PEN), liquid crystal polyacrylate, polyamide-imide, polyether sulfone, and the like is particularly preferable. On the other hand, for applications such as display devices in which visibility is required, a transparent base material, and specifically a transparent material such as a polypropylene, polystyrene, polyvinylidene chloride, polycarbonate, polyethylene terephthalate, PEN, and the like may be used. It should be noted that PET films are widely used in industry, and the film cured material for transducers of the present invention and PET films can be easily bonded.

The base material layer is preferably film-like or sheet-like. The thickness thereof is not particularly limited and can be designed with a desired thickness in accordance with the application. Furthermore, a primer, corona, etching, or plasma treatment may be used on the surface of the base material layer in advance to improve adhesion between the base material or the like and the cured material film for transducers, but with the present invention, chemical bonds can be easily formed between the two, so there is an advantage that an adhesive laminate body can be easily obtained without these pretreatments.

The method of obtaining such a laminate body is not particularly restricted, but it can be easily produced by a manufacturing method having a process of applying the curable organopolysiloxane composition for transducers of the present invention to at least one side of one or more layers selected from the electrode layer and the base material layer, and then curing.

Examples of methods of coating the curable fluoroorganopolysiloxane composition into a film can be, without limitation, gravure coating, offset gravure coating, offset gravure coating, roll coating using an offset transfer roll coater or the like, reverse roll coating, air knife coating, curtain coating using a curtain flow coater or the like, comma coating, Meyer bar, or other conventionally known methods used for the purpose of forming a cured layer. Furthermore, a plurality of layers of the curable organopolysiloxane composition of the present invention can be applied.

In the laminate body according to the present invention, the laminated organopolysiloxane cured material film preferably has a structure chemically bonded at an interface thereof. The structure is formed by bringing the organopolysiloxane cured material films after curing or before curing, or thin films of the curable organopolysiloxane composition in an uncured or semi-cured state, serving as precursors thereof (state before completely curing), into contact with each other, and then completely curing using heat or other means to advance a reaction between curing reactive groups at an interface between the cured material films. The process may be carried out by laminating in a layer-by-layer manner by advancing a curing reaction from the perspective of industrial production and production efficiency, or a plurality of curing reactive thin layers of the curable organopolysiloxane compositions may be pre-laminated and then completely cured as a whole using heat or other means.

More specifically, the laminate body of the present invention can be obtained by applying the curable organopolysiloxane composition for transducers to at least one side of one or more layers selected from the electrode layer and the base material layer, then stacking one or more layers selected from the other of the electrode layer or base material layer on the applied layer of the composition in an uncured or semi-cured state, and then fully curing the whole member. In addition, a laminate body having a film cured material for transducers between layers can be fabricated by fabricating a laminate body precursor having layers selected from two or three or more layers of electrode layers and base material layers laminated with a coating layer containing uncured curable organopolysiloxane composition for transducers between these layers (for example, a structure having but not limited to electrode layer / base material layer / (uncured composition layer) / base material layer / electrode layer, and the like), and curing the entire body.

The manufacturing method is particularly useful as a method for forming an electrode layer in a transducer member, and can industrially easily provide a laminate body, electronic component, or display device member, in which the dielectric layer and electrode layer are firmly joined and peeling or defect problems due to lack of adhesive strength and tracking are less likely to occur.

The laminate body of fluoroorganopolysiloxane cured material films according to the present invention is useful as an electronic material, a member for a displaying device, and a member for a transducer (including sensors, speakers, actuators, and generators), and can be particularly preferably used as an electroactive film (including high dielectric films) provided with an electrode layer, an electronic component, or a member for a displaying device. Furthermore, as described above, an electroactive film with high dielectric breakdown strength is preferred in actuators and other transducer members in the form of a single layer or a laminated film and is particularly useful in applications for an actuator activated under high voltage due to having a structure in which the electrode layers are tightly joined together.

## EXAMPLES

The present invention will be described below by way of examples; however, the present invention is not limited thereto. The following compounds were used in the Examples and Comparative Example described below. The physical properties of each composition were measured by the following methods.

[Viscosity of Composition Before Curing]

The viscosity prior to the curing of each composition was measured using a viscoelasticity measuring device (manufactured by Anton Paar, model number MCR302). Measurements were performed using a 20 mm diameter, 2° cone - plate with different shear rates. The overall viscosities $\eta_{0.1}$ and $\eta_{10.0}$ of the composition measured at 25°C and at shear rates of 0.1 ($s^{-1}$) and 10.0 ($s^{-1}$) were recorded, respectively. The results, including thixotropic index (TI) values, are presented in Tables 1 and 2.

[Storage modulus and loss modulus]

The curable fluoroorganopolysiloxane compositions were cured at 130°C for 1 hour, and then the storage modulus was measured with a viscoelasticity measuring device (manufactured by Anton Paar, model number: MCR302). A Peltier element temperature control system and a 8 mm diameter parallel plate were used to set the sample to a thickness of approximately 2 mm. Measurements were made at 23°C with micro-deformation (about 0.2%) and with frequency sweep. The storage modulus (G'), loss modulus (G") and loss tangent at 0.2 Hz are shown in Tables 1 and 2.

[Evaluation of Adhesion]

About 1 g of the curable fluoroorganopolysiloxane composition was applied to a 200 $\mu$m thick polyethylene terephthalate film and cured at 130°C for 1 hour. The cured material was then pulled off with a spatula and visually evaluated to determine whether the peeling mode was interface peeling (AF) or cohesive breakdown (CF) based on the presence of cured material residue. The results are shown in Tables 1 and 2.

- Component (A): 3,3,3-trifluoropropylmethyl, dimethylsiloxane copolymer (amount of vinyl groups: 0.26 mass%, siloxane polymerization degree: 193) blocked at both ends with a vinyldimethylsiloxy group
- Component (B1): Dimethylsiloxane / 3,3,3- trifluoropropylmethylsiloxane / methylhydrogen siloxane copolymer blocked at both ends by a trimethylsiloxsane group (amount of silicon-bonded hydrogen: approximately 0.23 mass%)
- Component (B2): Dimethylsiloxane / 3,3,3- trifluoropropylmethylsiloxane copolymer blocked at both ends by a dimethyhydrosiloxy group (amount of silicon-bonded hydrogens: approximately 0.013 mass%)
- Component (C): Dimethylsiloxane polymer solution blocked at both ends by vinyldimethylsiloxy groups of a platinum-1,3-divinyl 1,1,3,3-tetramethyldisiloxane complex (approximately 0.6 mass% in platinum concentration)
- Component (D1): Fumed silica treated with hexamethyldisilazane and 1,3-bis(3,3,3-trifluoropropyl)-1,1,3,3-tetramethyldisilazane (product name prior to treatment: AEROSIL® 200, BET specific surface area: 200 $m^2/g$)
- Component (D2): Fumed silica treated with hexamethyldisilazane and 1,3-bis(3,3,3-trifluoropropyl)-1,1,3,3-tetramethyldisilazane (product name prior to treatment: AEROSIL® 50, BET specific surface area: 50 $m^2/g$)
- Component (E): Adhesion improving agent (= reaction product of methylvinylsiloxane and is glycidoxypropyl trimethoxysilane, blocked at both ends with a hydroxydimethylsiloxy group (amount of vinyl groups (wt.%) is approximately 5.6))
- Component (F): 1,3,5,7-tetramethyl-1,3,5,7-tetravinyl-cyclotetrasiloxane

[Curable fluoroorganopolysiloxane composition according to Examples 1 to 4 and comparative examples 1 to 6]

As liquid curable fluoroorganopolysiloxane compositions, each of the above components was blended by weight% as listed in Table 1. The $p_{x1}$ values in the compositions were set as described in Table 1. When mixing each component, the materials were prepared by mixing under vacuum using a rotation/rotary mixer (product name: ARE-310, manufactured by Thinky Corporation). Various physical properties are also shown in Table 1 and 2.

[Table 1]

| | Example 1 | Example 2 | Example 3 | Example 4 | Example 5 |
|---|---|---|---|---|---|
| Component A | 70.21 | 68.38 | 64.51 | 74.98 | 71.04 |
| Component B1 | 2.90 | 2.56 | 1.82 | 2.88 | 3.16 |
| Component B2 | 13.77 | 17.36 | 25.07 | 13.55 | 14.74 |
| Component C | 0.06 | 0.05 | 0.04 | 0.04 | 0.89 |
| Component D1 | 10.63 | 9.37 | 6.66 | 6.65 | 7.76 |
| Component D2 | 1.30 | 1.15 | 0.82 | 0.82 | 0.96 |
| Component E | 0.99 | 1.00 | 0.99 | 1.00 | 1.16 |
| Component F | 0.16 | 0.14 | 0.10 | 0.10 | 0.29 |
| Total | 100 | 100 | 100 | 100 | 100 |
| $([H_{B1}]+ [H_{B2}])/[Total\_Vi]$ | 0.8 | 0.8 | 0.8 | 0.8 | 0.6 |
| $[H_{B1}]/[H_{B2}]$ | 3.8 | 2.6 | 1.3 | 3.7 | 3.61 |
| $p_{x1}$ | 5.0 | 3.5 | 1.7 | 4.9 | 5.8 |
| $W_f\%$ | 12 | 11 | 7 | 7 | 9 |
| Component E weight% | 1.0 | 1.0 | 1.0 | 1.0 | 1.0 |
| G'/Pa | $3.8\times10^4$ | $2.0\times10^4$ | $8.0\times10^3$ | $1.4\times10^4$ | $3.6\times10^4$ |
| G"/Pa | $5.2\times10^3$ | $2.5\times10^3$ | $1.3\times10^3$ | $1.3\times10^3$ | $2.5\times10^3$ |
| Loss tangent | 0.14 | 0.13 | 0.16 | 0.09 | 0.07 |
| $\eta_{0,1}$/Pa·s | 1871 | 1176 | 424 | 445 | 755 |
| $\eta_{10.0}$/Pa·s | 40 | 27 | 13 | 13 | 21 |
| TI | 47 | 43 | 32 | 34 | 36 |
| Adhesion to PET | CF | CF | CF | CF | CF |

[Table 2]

| | Comparative Example 1 | Comparative Example 2 | Comparative Example 3 | Comparative Example 4 | Comparative Example 5 | Comparative Example 6 |
|---|---|---|---|---|---|---|
| Component A | 76.31 | 71.11 | 79.60 | 79.16 | 80.60 | 65.22 |
| Component B1 | 2.54 | 3.12 | 2.49 | 2.55 | 5.17 | 5.87 |
| Component B2 | 9.56 | 11.75 | 9.34 | 6.63 | 5.64 | 6.73 |
| Component C | 0.05 | 0.06 | 0.04 | 0.05 | 0.04 | 0.08 |
| Component D1 | 9.28 | 11.41 | 6.67 | 9.32 | 6.68 | 18.69 |
| Component D2 | 1.14 | 1.40 | 0.82 | 1.14 | 0.82 | 2.29 |
| Component E | 1.01 | 1.00 | 0.96 | 1.01 | 0.97 | 0.83 |

(continued)

| | Comparative Example 1 | Comparative Example 2 | Comparative Example 3 | Comparative Example 4 | Comparative Example 5 | Comparative Example 6 |
|---|---|---|---|---|---|---|
| Component F | 0.14 | 0.17 | 0.10 | 0.14 | 0.10 | 0.32 |
| Total | 100 | 100 | 100 | 100 | 100 | 100 |
| $([H_{B1}]+[H_{B2}])/[Total\_Vi]$ | 0.6 | 0.8 | 0.6 | 0.6 | 1.1 | 1.2 |
| $[H_{B1}]/[H_{B2}]$ | 4.7 | 4.7 | 4.7 | 6.9 | 16.5 | 16.5 |
| $p_{x1}$ | 7.8 | 6.3 | 7.8 | 12.4 | 15.1 | 14.2 |
| $w_f\%$ | 10 | 13 | 7 | 10 | 7 | 21 |
| Component E weight% | 1.0 | 1.0 | 1.0 | 1.0 | 1.0 | 0.8 |
| G7Pa | $1.5\times10^4$ | $5.9\times10^4$ | $5.2\times10^3$ | $1.1\times10^4$ | $5.9\times10^4$ | Obviously high and unmeasured |
| G"/Pa | $2.8\times10^3$ | $7.7\times10^3$ | $8.4\times10^2$ | $2.1\times10^3$ | $3.6\times10^3$ | Not measured. |
| Loss tangent | 0.19 | 0.13 | 0.16 | 0.19 | 0.06 | Not measured. |
| $\eta_{0.1}/Pa\cdot s$ | 1239 | 2409 | 460 | 1273 | 461 | 7409 |
| $\eta_{10.0}/Pa\cdot s$ | 29 | 49 | 14 | 29 | 14 | 160 |
| TI | 43 | 49 | 33 | 44 | 33 | 46 |
| Adhesion to PET | AF | AF | AF | AF | CF | CF |

[Summary]

The curable fluoroorganopolysiloxane compositions of Examples 1 to 4 have a moderate viscosity and thixotropic index by optimizing the $p_{x1}$ value, and preferably the $w_f$ value, to achieve the object of the present invention, and thus have excellent uniform application properties and a storage modulus (G') suitable as a transducer member. The peel mode between the two layers was cohesive failure (CF), and the PET film and the cured material were chemically bonded between the layers to achieve good adhesion and tracking properties.

On the other hand, if the $p_{x1}$ and $w_f$ values are outside the optimum values, either sufficient adhesion or adhesive strength might not be achieved, resulting in interfacial delamination (AF) between layers, and even if a certain adhesive strength is achieved, the G' value of the cured material will be high, so there will be practical problems as transducer member.

**Claims**

**1.** A curable organopolysiloxane composition for a transducer, comprising at least:

(A) one or more organopolysiloxane having a curable reactive group having at least two carbon-carbon double bonds in one molecule;
(B1) an organohydrogenpolysiloxane having at least one silicon atom-bonded hydrogen atom in a side chain moiety of a molecular chain, no silicon atom-bonded hydrogen atom at least at one end of the molecular chain, and at least two silicon atom-bonded hydrogen atoms in the molecule;

17

(B2) an organohydrogenpolysiloxane having a silicon atom-bonded hydrogen atom at both terminals of the molecular chain and at least two silicon-bonded hydrogen atoms in a molecule;
(C) an effective amount of a hydrosilylation reaction catalyst;
(D) reinforcing filler; and
(E) adhesion imparting agent,
wherein if
($H_{B1}$) represents the number of silicon atom-bonded hydrogen atoms in component (B1),
($H_{B2}$) represents the number of silicon atom-bonded hydrogen atoms in component (B2), and
(Vi) represents a total number of curing reactive groups containing a carbon-carbon double bond in component (A),
a value of $p_{x1}$ as defined by the following relational formula:

$$p_{x1} = \{H_{B1}/H_{B2}\}/\{(H_{B1}+H_{B2})/Vi\}$$

is within a range of 0.1 to 6.0.

2. A curable organopolysiloxane composition for a transducer according to claim 1, wherein an amount ($w_f$) of component (D) is in the range of 5 to 40 % by mass when the total of components (A) to (E) is 100% by mass.

3. A curable organopolysiloxane composition for a transducer according to Claim 1 or Claim 2, wherein at least a portion of component (A) is (A1) one or more organopolysiloxane containing a fluoroalkyl group which is a fluoroalkyl group having at least two alkenyl groups in a molecule, where 10 mol% or more of all substitution groups on a silicon atom are expressed by ($C_pF_{2p+1}$)-R- (where R is an alkylene group having 1 to 10 carbon atoms, and p is an integer from 1 to 8).

4. The curable organopolysiloxane composition for a transducer according to any one of claims 1 to 3, wherein at least a portion of component (D) is inorganic oxide fine particles.

5. The curable organopolysiloxane composition for a transducer according to any one of claims 1 to 4, wherein the cured material obtained by curing the composition has a storage modulus (G') in a range of $1.0 \times 10^3$ to $5.0 \times 10^4$ Pa during microdeformation at 23°C and 0.02 Hz.

6. The curable organopolysiloxane composition for a transducer according to any one of claims 1 to 5, wherein the overall viscosity of the composition measured at 25°C and a shear rate of 0.1 ($S^{-1}$) is in a range of 5 to 5,000,000 mPa-s, and the value of the thixotropic index (TI) of the composition, which is the ratio of the overall viscosity ($\eta_{0.1}$) of the composition measured at a shear rate of 0.1 ($S^{-1}$) and the overall viscosity ($\eta_{10.0}$) of the composition measured at a shear rate of 10.0 ($S^{-1}$) (=$\eta_{0.1}/\eta_{10.0}$), is 250 or less.

7. A cured material, made by curing the curable organopolysiloxane composition for transducers according to any one of claims 1 to 6.

8. A film cured material for transducers, made by curing the curable organopolysiloxane composition for a transducer according to any one of claims 1 to 6.

9. A laminate body having a structure made by laminating one or more layers selected from an electrode layer and a base material layer, with the film cured material for transducers, made by curing the curable organopolysiloxane composition for a transducer according to any one of claims 1 to 6.

10. The laminate body according to claim 9, wherein a chemical bond is at least partially formed at an interface between the film cured material for transducers and one or more type of layers selected from the electrode layer and the base material layer.

11. The laminate body according to claim 9 or 10, wherein

at least a portion of the electrode layer and/or the base material layer are layers made of a thermoplastic resin; and
a chemical bond is at least partially formed at an interface between the film cured material for transducers and the layer made of a thermoplastic resin.

**12.** The laminate body according to any one of claims 9 to 11, wherein the film cured material for transducers has a structure sandwiched between upper and lower electrode layers or base materials on both surfaces of the film.

**13.** A method for manufacturing the laminate body according to any one of claims 9 to 12, comprising a step of applying and curing the curable organopolysiloxane composition for a transducer according to any one of claims 1 to 5 on at least one side of one or more types of layers selected from the electrode layer and the base material layer.

**14.** A transducer member, comprising the laminate body according to any one of Claims 8 to 11.

**15.** A transducer, comprising the laminate body according to any one of Claims 8 to 11.

**16.** An electronic component or display device, comprising the laminate body according to any one of Claims 8 to 11.

## INTERNATIONAL SEARCH REPORT

| International application No. |
|---|
| **PCT/JP2022/026764** |

**A. CLASSIFICATION OF SUBJECT MATTER**

*C08L 83/07*(2006.01)i; *B32B 27/00*(2006.01)i; *C08K 3/013*(2018.01)i; *C08L 83/05*(2006.01)i; *H01L 41/193*(2006.01)i; *H04R 19/02*(2006.01)i

FI: C08L83/07; B32B27/00 101; C08K3/013; C08L83/05; H01L41/193; H04R19/02

According to International Patent Classification (IPC) or to both national classification and IPC

**B. FIELDS SEARCHED**

Minimum documentation searched (classification system followed by classification symbols)

C08L83/00-83/16; C08K3/00-13/08; B32B1/00-43/00; H01L41/00-41/47; H04R1/00-31/00; H02N1/00-2/18; H02N11/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | WO 2020/090797 A1 (DOW TORAY CO LTD) 07 May 2020 (2020-05-07) claims, paragraphs [0205], [0263], column "examples" (for example, example 2), etc. | 1-16 |
| X | WO 2020/138055 A1 (DOW TORAY CO LTD) 02 July 2020 (2020-07-02) claims, paragraphs [0195], [0249], column "examples" (for example, example 1), etc. | 1-16 |
| X | WO 2020/138039 A1 (DOW TORAY CO LTD) 02 July 2020 (2020-07-02) claims, paragraphs [0194], [0252], column "examples" (for example, example 4), etc. | 1-16 |
| X | WO 2018/211981 A1 (DOW CORNING TORAY CO LTD) 22 November 2018 (2018-11-22) claims, column "examples" (for example, "example 11"), etc. | 1-16 |
| X | JP 2016-505693 A (DOW CORNING CORPORATION) 25 February 2016 (2016-02-25) claims, column "examples" (for example, example 1), etc. | 1-16 |
| A | WO 2021/125353 A1 (DOW TORAY CO LTD) 24 June 2021 (2021-06-24) | 1-16 |
| A | WO 2020/116441 A1 (DOW TORAY CO LTD) 11 June 2020 (2020-06-11) | 1-16 |

☑ Further documents are listed in the continuation of Box C.     ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **14 September 2022** | **27 September 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT

| | International application No. |
|---|---|
| | **PCT/JP2022/026764** |

**C.**     **DOCUMENTS CONSIDERED TO BE RELEVANT**

| Category* | Citation of document, with indication, where appropriate, of the relevant passages | Relevant to claim No. |
|---|---|---|
| A | JP 2016-503108 A (DOW CORNING CORPORATION) 01 February 2016 (2016-02-01) | 1-16 |

Form PCT/ISA/210 (second sheet) (January 2015)

INTERNATIONAL SEARCH REPORT
Information on patent family members

| International application No. |
| --- |
| **PCT/JP2022/026764** |

| Patent document cited in search report | | | Publication date (day/month/year) | Patent family member(s) | | | Publication date (day/month/year) |
| --- | --- | --- | --- | --- | --- | --- | --- |
| WO | 2020/090797 | A1 | 07 May 2020 | EP claims, paragraphs [0205], [0263], column "examples" (for example, example 2), etc. | 3875543 | A1 | |
| WO | 2020/138055 | A1 | 02 July 2020 | CN | 113195222 | A | |
| | | | | KR | 10-2021-0105408 | A | |
| WO | 2020/138039 | A1 | 02 July 2020 | CN | 113165348 | A | |
| | | | | KR | 10-2021-0108427 | A | |
| WO | 2018/211981 | A1 | 22 November 2018 | US claims, column "examples" (for example, example 11), etc. | 2020/0071527 | A1 | |
| | | | | EP | 3626781 | A1 | |
| JP | 2016-505693 | A | 25 February 2016 | US claims, column "examples" (for example, example 1), etc. | 2015/0380636 | A1 | |
| | | | | WO | 2014/105965 | A1 | |
| WO | 2021/125353 | A1 | 24 June 2021 | TW | 202132469 | A | |
| WO | 2020/116441 | A1 | 11 June 2020 | US | 2022/0089840 | A1 | |
| | | | | EP | 3892687 | A1 | |
| JP | 2016-503108 | A | 01 February 2016 | US | 2015/0344671 | A1 | |
| | | | | WO | 2014/105959 | A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2016098334 A
- WO 2016163069 A
- WO 2014105959 A

### Non-patent literature cited in the description

- **KUJAWSKI, M. ; PEARSE, J. D. ; SMELA, E.** *Carbon,* 2010, vol. 48, 2409-2417
- **ROSSET, S. ; SHEA, H. R.** *Appl. Phys. A,* 2013, vol. 110, 281-307